**Europäisches Patentamt**

**European Patent Office**

**Office européen des brevets**

(19)

(11) Veröffentlichungsnummer: **0 032 240**
**B1**

# (12) EUROPÄISCHE PATENTSCHRIFT

(45) Veröffentlichungstag der Patentschrift:
14.03.84

(21) Anmeldenummer: 80108214.0

(22) Anmeldetag: 24.12.80

(51) Int. Cl.³: **C 09 B 17/02**

(54) **Verfahren zur Herstellung von Anilin-Kondensationsfarbstoffen.**

(30) Priorität: **09.01.80 DE 3000529**

(43) Veröffentlichungstag der Anmeldung:
**22.07.81 Patentblatt 81/29**

(45) Bekanntmachung des Hinweises auf die Patenterteilung:
**14.03.84 Patentblatt 84/11**

(84) Benannte Vertragsstaaten:
**DE GB IT**

(56) Entgegenhaltungen:
**US - A - 1 988 499**
**US - A - 4 056 530**

**CHEMICAL ABSTRACTS, Band 88, Nr. 10, 6. März 1978,**
**Seite 45, Nr. 63262z Columbus, Ohio, U.S.A.**
**CHEMICAL ABSTRACTS, Band 84, Nr. 10, 8. März 1976,**
**Seite 95, Nr. 61207d Columbus, Ohio, U.S.A.**

(73) Patentinhaber: **BAYER AG, Konzernverwaltung RP**
**Patentabteilung, D-5090 Leverkusen 1 Bayerwerk (DE)**

(72) Erfinder: **Maurer, Werner, Dr., Domblick 8,**
**D-5090 Leverkusen 31 (DE)**
Erfinder: **Zimmer, Johann, Schleiermacher Strasse 15,**
**D-5090 Leverkusen 1 (DE)**

## Verfahren zur Herstellung von Anilin-Kondensationsfarbstoffen

Die Erfindung betrifft Verfahren zur Herstellung von Anilin-Kondensationsfarbstoffen, bei denen die Aufarbeitung kontinuierlich durchgeführt wird.

Die Herstellung von Nigrosinfarbstoffen durch Kondensation von Anilin und Nitrobenzol in Gegenwart von Eisensalzen und Mineralsäuren ist seit langem bekannt. Ebenso ist die Aufarbeitung dieser in überschüssigem Anilin gelösten Rohfarbstoffe durch Waschen mit Wasser, Säuren oder Laugen oder mit Kombinationen dieser Stoffe — wie z. B. erst mit Säure, dann mit Wasser — und die anschließende Trocknung der anilinhaltigen Phase seit vielen Jahren Stand der Technik (Ullmann, Band 8, 4. Auflage, Seiten 230—231).

In der JP-PS 50 134 028 wird ein Verfahren beschrieben, das eine kontinuierliche Kondensation in zwei nacheinandergeschalteten Temperaturschritten vorsieht.

In der US-PS 4 056 530 wird ein halbkontinuierliches Verfahren zur Herstellung von Nigrosinfarbstoffen beschrieben, bei dem die Kondensation schrittweise bei verschiedenen Temperaturen vorgenommen wird.

Die vorliegende Erfindung betrifft nun ein Verfahren zur Herstellung von Anilin-Kondensationsfarbstoffen durch Umsetzung von Anilin und/oder Alkylanilin mit Nitrobenzol, das substituiert sein kann und/oder Diazoaminobenzol unter Erwärmen und in Gegenwart eines Katalysators, das dadurch gekennzeichnet ist, daß die Aufarbeitung des Reaktionsgemischs kontinuierlichh durchgeführt wird.

In die an sich bekannte Kondensationsreaktion werden neben Nitrobenzol und Diazoaminobenzol bevorzugt Halogennitrobenzol, insbesondere o-Chlornitrobenzol und/oder Alkylnitrobenzol eingesetzt.

Als Katalysatoren finden vorzugsweise Eisensalze gegebenenfalls in Gegenwart von Mineralsäuren Verwendung.

Besonders bevorzugt dient das erfindungsgemäße Verfahren zur Herstellung von Nigrosinfarbstoffen durch Kondensation von Anilin und Nitrobenzol in Gegenwart von Eisenchlorid und gegebenenfalls Salzsäure.

Die Kondensation kann auf herkömmliche Art partienweise, taktweise oder kontinuierlich durchgeführt werden.

So ist ein teilkontinuierliches Verfahren gemäß der Erfindung d. g., daß die Kondensation im Taktverfahren erfolgt, während die Aufarbeitung der gebildeten Kondensationsfarbstoffe sowie gegebenenfalls der anilinhaltigen Abwässer kontinuierlich durchgeführt wird.

Beim teilkontinuierlichen Verfahren werden beispielsweise Anilin, Eisenchlorid und gegebenenfalls Salzsäure gleichzeitig oder nacheinander in einen Reaktor eingeleitet oder eingetragen; die Dosierung erfolgt über Waagen, Meßgefäße, Volumenmesser oder Durchflußmesser.

Eisenchlorid kann als Pulver oder als wäßrige Lösung zugegeben werden. Das Beschicken der Reaktoren erfolgt taktweise. Die Anzahl der Reaktoren und die jeweilige Reaktionstemperatur (ewa 120 bis etwa 200° C) sind abhängig vom herzustellenden Kondensationsfarbstofftyp. Arbeitet man mit mehreren Reaktoren, so verwendet man vorteilhaft eine Temperaturkaskade.

Dabei wird der 1. Reaktor mit den Reaktionskomponenten gefüllt. Nach einer festgelegten Zeit wird der Ansatz vom 1. Reaktor in den 2. Reaktor gefördert und wieder nach einer festgelegten Zeit vom 2. in den 3. Reaktor, usw. Wenn der 1. Reaktor leer ist, kann er erneut beschickt werden.

Das Befördern des Reaktionsgemisches von einem Reaktor zum anderen bzw. vom letzten Reaktor in die Aufarbeitung kann mittels Pumpen oder durch Abdrücken mit Stickstoff, oder, falls die Lage es erlaubt, durch den freien Fall bewerkstelligt werden.

Eine taktweise Kondensation, die erfindungsgemäß der kontinuierlichen Aufarbeitung vorausgehen kann, ist beispielsweise auch aus der US-PS 4 056 530 bekannt.

Die Aufarbeitung der Kondensationsfarbstoffschmelzen und gegebenenfalls der Abwässer erfolgt kontinuierlich wie weiter unten beschrieben.

Ein vollkontinuierliches Verfahren gemäß der vorliegenden Erfindung ist d. g., daß sowohl die Kondensation wie auch die Aufarbeitung der gebildeten Kondensationsfarbstoffe sowie gegebenenfalls der anilinhaltigen Abwässer kontinuierlich erfolgt.

Bei diesem Verfahren werden z. B. Anilin, Nitrobenzol, Eisenchloridlösung und gegebenenfalls Salzsäure über Durchflußmesser oder Volumenmesser wie z. B. Ringkolbenzähler in die Reaktoren eingeleitet.

Durch zwischengeschaltete Regelventile werden die gewünschten Flüssigkeitsmengen eindosiert. Die Komponenten werden in die Reaktoren gepumpt, oder, falls die Lage der Vorratsbehälter es erlaubt, im freien Fall in die Reaktoren eingeleitet.

Die Mengenverhältnisse der Reaktionskomponenten werden für jeden Farbstofftyp festlegt. Durch Abhängigkeitsschaltung von einer Führungsgröße (z. B. Anilin) können bei Veränderung des Fahrtempos die anderen Komponenten in einfacher Weise nachgeführt werden.

Durch Festlegen von bestimmten Standhöhen in den Reaktoren ist gewährleistet, daß die zur Verfügung stehenden Reaktorvolumina, und damit bei gleichmäßigem Fahrtempo, die Verweilzeiten konstant bleiben.

Das Befördern des Reaktionsgemisches wird mittels Pumpen, oder, falls die Lage der Reaktion es zuläßt, durch den natürlichen Höhenunterschied bewerkstelligt.

Die jeweilige Reaktionstemperatur ist abhängig vom herzustellenden Kondensationsfarbstoff; sie liegt im allgemeinen im Bereich von 120−200° C.

Die kontinuierliche Aufarbeitung der durch partienweise, taktweise oder kontinuierliche Kondensation erhaltenen Farbstoffe kann dadurch erfolgen, daß man

a) die anfallende anilinhaltige Farbstoffschmelze kontinuierlich mit einem wäßrigen Medium mischt, gegebenenfalls je nach Farbstofftyp den pH-Wert einstellt und gegebenenfalls kontinuierlich die wäßrige Phase von der anilinhaltigen Farbstoffschmelze scheidet und Anilin entfernt oder

b) die anilinhaltige Farbstoffschmelze mit Salzsäure innig vermischt, den ausgefallenen Farbstoff kontinuierlich abfiltriert und kontinuierlich wäscht und man den Filtrationsrückstand gegebenenfalls nach Naßmahlung und erneutem Abfiltrieren, gegebenenfalls kontinuierlich, trocknet;

c) die anilinhaltige Farbstoffschmelze vor der Vermischung mit einem wäßrigen Medium duch Sprühtrocknung, Normaldruck-, Vakuumdestillation oder ähnliche Verfahren weitgehend von Anilin befreit.

Die kontinuierliche Arbeitsweise gemäß Weg a) kann z. B. so erfolgen, daß man die Nigrosinschmelze kontinuierlich mit Wasser, verdünnter, vorzugsweise 2−20%iger Natronlauge, verdünnter, vorzugsweise 0,5−2%iger Salzsäure, mit wäßrig-alkalischer, vorzugsweise 2−8% Kochsalz und 2−15% Natriumhydroxid enthaltender Kochsalzlösung oder mit wäßrig-saurer, vorzugsweise 2−8% Kochsalz und 0,5−2% Salzsäure enthaltender Kochsalzlösung oder mit 4−12%iger Kochsalzlösung in Reaktoren mit gut wirkenden Rührern oder in Mischrohren, Mischdüsen oder Mischpumpen innig vermischt. Danach gelangt die Mischung in Abscheider, wo eine Trennung in anilinhaltige Farbstofflösung und anorganische Phase stattfindet und beide Phasen kontinuierlich abfließen.

Nach erneuter Trennung von organischer und wäßriger Phase in einem Abscheider gelangt die anilinhaltige Farbstofflösung zur Entfernung von Anilin in einen Trockner. Gegebenenfalls wird der Farbstoff nach dem Trocknen noch gewaschen.

Die kontinuierliche Aufarbeitung gemäß Weg b) kann z. B. so erfolgen, daß man durch kontinuierliches Vermischen der Nigrosinschmelze mit größeren Mengen verdünnter, vorzugsweise 2−10%iger Salzsäure in Reaktoren mit gut wirkenden Rührern oder in Mischrohren, Mischdüsen oder Mischpumpen den Farbstoff ausfällt, diesen auf ein Kontifilter fördert und kontinuierlich abfiltriert und wäscht. Je nach Einsatzgebiet des herzustellenden Kondensationsfarbstoffs wird der isolierte feuchte Farbstoff neutralisiert, gemahlen und getrocknet oder getrocknet und gemahlen oder auch nur getrocknet. Gegebenenfalls kann nach der Neutralisation eine weitere Filtration eingeschaltet werden. Das Finishing der Farbstoffe durch Trocknen und/oder Mahlen kann kontinuierlich oder diskontinuierlich erfolgen. Für die Trocknung geeignet sind beispielsweise Sprüh- oder Zerstäubertrocknung sowie Kontakttrocknung.

Die kontinuierliche Aufarbeitung gemäß Weg c) kann z. B. so erfolgen, daß man die Nigrosinschmelze in einem Trockner kontinuierlich oder takweise weitgehend von Anilin befreit und dann den trocknen Farbstoff mit verdünnter, vorzugsweise 2−10%iger Salzsäure kontinuierlich in Reaktoren mit gut wirkenden Rührern oder in Mischrohren, Mischdüsen oder Mischpumpen digeriert, den Farbstoff dann auf ein Kontifilter fördert und kontinuierlich abfiltriert und wäscht. Je nach Einsatzgebiet des herzustellenden Kondensationsfarbstoffs wird der isolierte feuchte Farbstoff neutralisiert, gemahlen und getrocknet oder getrocknet und gemahlen oder auch nur getrocknet. Gegebenenfalls kann nach der Neutralisation eine weitere Filtration eingeschaltet werden. Das Finishing der Farbstoffe durch Trocknen und/oder Mahlen kann kontinuierlich oder diskontinuierlich erfolgen. Für die Trocknung geeignet sind beispielsweise Sprüh- oder Zerstäubertrocknung sowie Kontakttrocknung.

Die Nigrosinfarbstoffe dienen als wasserunlösliche Pigmentfarbstoffe z. B. zum Färben von Kunststoffen, Fasern und zur Herstellung von Schuhcremes.

Diese wasserunlöslichen Nigrosinfarbstoffe werden als freie Nigrosinbasen oder als deren Salze z. B. als Hydrochlorid eingesetzt.

Durch Sulfierung der wasserunlöslichen Nigrosinfarbstoffe mit Schwefelsäure und/oder Oleum kommt man zu den wasserlöslichen Nigrosinen, die zum Färben von Papier, Leder, Kunststoffen etc. und als Flotationshilfsmittel eingesetzt werden.

Beispiel 1

In zwei hintereinandergeschalteten Reaktoren werden Anilin, Nitrobenzol und salzsaure Eisenchloridlösung bei Temperaturen von 150−180° C umgesetzt. Die Komponenten werden kontinuierlich in den 1. Reaktor eindosiert. Pro Stunde werden folgende Mengen eingespeist: 375 kg Anilin, 138 kg Nitrobenzol und 75 kg einer Eisen-(II)-chloridlösung. Letztere enthält 22% $FeCl_2$, 18% HCl und 60% $H_2O$. Der 1. Reaktor wird bei 150° C, der 2. Reaktor bei 180° C gefahren. Die mittlere Verweilzeit pro Reaktor beträgt 12 Stunden. Das Reaktionsgemisch wird kontinuierlich vom 1. Reaktor in den 2. Reaktor gefördert. Freiwerdender Wasserdampf wird in Kondensatoren kondensiert und in Vorlagen aufgefangen. Vom 2. Reaktor wird der fertige, in überschüssigem Anilin gelöste Farbstoff (Farbstoffschmelze) kontinuierlich in die Aufarbeitung gefördert. Dort wird die Farbstoffschmelze mit verdünnter ca. 8%iger wäßriger Salzsäure kontinuierlich vermischt, wobei der Farbstoff ausfällt. Der Farbstoff wird in einem Vakuumdrehfilter kontinuierlich abfiltriert und mit Wasser gewaschen. Anschließend wird er getrocknet und falls gewünscht gemahlen. Die Filtrate, das Kondensat aus der Reaktion und das Destillat aus der Trocknung werden nach Neutralisation mit Natronlauge kontinuierlich auf eine Kolonne aufgegeben, um sie durch Einblasen von Dampf von Anilin zu befreien. Das wiedergewonnene Anilin gelangt erneut zum Einsatz.

## Beispiel 2

In 4 hintereinandergeschalteten Reaktoren werden Anilin, Nitrobenzol und salzsaure Eisenchloridlösung bei Temperaturen von 120—200°C umgesetzt. Die Komponenten werden kontinuierlich in den 1. Reaktor eindosiert. Pro Stunde werden folgende Mengen eingespeist: 640 kg Anilin, 235 kg Nitrobenzol und 127 kg einer Eisen-(II)-chloridlösung. Letztere enthält 22% $FeCl_2$, 18% HCl und 60% $H_2O$. Der 1. Reaktor wird bei 120°C, der 2. Reaktor bei 155°C, der 3. Reaktor bei 180°C und der 4. Reaktor bei 200°C gefahren. Die mittlere Verweilzeit bei den Reaktoren 1—3 beträgt 7 Stunden, beim Reaktor 4 3 Stunden. Das Reaktionsgemisch wird kontinuierlich von einem Reaktor zum anderen gefördert. Freiwerdender Wasserdampf wird kondensiert und in Vorlagen aufgefangen. Vom 4. Reaktor wird die Farbstoffschmelze kontinuierlich in die Aufarbeitung gefördert. Dort wird die Farbstoffschmelze mit verdünnter ca. 6%iger wäßriger Salzsäure kontinuierlich vermischt, wobei der Farbstoff ausfällt. Der Farbstoff wird in einem Vakuumdrehfilter kontinuierlich abfiltriert und mit Wasser gewaschen. Danach wird die wäßrige Farbstoffanschlämmung mit Natronlauge neutralisiert. Es wird erneut filtriert und mit Wasser gewaschen. Der feuchte Filterkuchen wird in einer Naßmühle z. B. einer Trigonal-Zahlringmühle gemahlen und in einem Trockner entwässert. Die Filtrate, das Kondensat aus der Reaktion und das Destillat aus der Trocknung werden nach Neutralisation mit Natronlauge kontinuierlich auf eine Kolonne aufgegeben, um sie durch Einblasen von Dampf von Anilin zu befreien. Das wiedergewonnene Anilin gelangt erneut zum Einsatz.

## Beispiel 3

In 3 hintereinandergeschalteten Reaktoren werden Anilin, Nitrobenzol und salzsaure Eisenchloridlösung bei Temperaturen von 150—180°C umgesetzt. Die Komponenten werden kontinuierlich in den 1. Reaktor eindosiert. Pro Stunde werden folgende Mengen eingespeist: 420 kg Anilin, 207 kg Nitrobenzol und 113 kg einer Eisen-(II)-chloridlösung. Letztere enthält 22% $FeCl_2$, 18% HCl und 60% $H_2O$. Der 1. Reaktor wird bei 150°C, der 2. Reaktor bei 175°C, der 3. Reaktor bei 180°C gefahren. Die mittlere Verweilzeit pro Reaktor beträgt 8 Stunden. Das Reaktionsgemisch wird kontinuierlich von einem Reaktor zum anderen gefördert. Freiwerdender Wasserdampf wird kondensiert und in Vorlagen aufgefangen. Vom 3. Reaktor wird die Farbstoffschmelze kontinuierlich in die Aufarbeitung gefördert. Dort wird die heiße Schmelze kontinuierlich mit Wasser vermischt, in einem Abscheider von der wäßrigen Phase geschieden und in einem Trockner anilinfrei getrocknet. Der Farbstoff kann als solcher eingesetzt oder falls gewünscht gemahlen werden. Das wiedergewonnene Anilin aus der Trocknung gelangt erneut zum Einsatz. Die anilinhaltigen Wässer aus Reaktion (Kondensat) und aus Scheidung werden nach Neutralisation mit Natronlauge kontinuierlich auf eine Kolonne aufgegeben, um sie durch Einblasen von Dampf von Anilin zu befreien. Auch das hierbei wiedergewonnene Anilin gelangt erneut zum Einsatz.

## Beispiel 4

In 3 hintereinandergeschalteten Reaktoren werden Anilin, Nitrobenzol und wäßrige Eisenchloridlösung bei Temperaturen von 150—180°C umgesetzt. Die Komponenten werden kontinuierlich in den 1. Reaktor eindosiert. Pro Stunde werden folgende Mengen eingespeist: 210 kg Anilin, 104 kg Nitrobenzol und 50 kg einer 30%igen wäßrigen Eisen-(II)-chloridlösung. Der 1. Reaktor wird bei 150°C, der 2. Reaktor bei 170°C und der 3. Reaktor bei 175°C gefahren. Die mittlere Verweilzeit pro Reaktor beträgt 16 Stunden. Das Reaktionsgemisch wird kontinuierlich von einem Reaktor zum andern gefördert. Freiwerdender Wasserdampf wird kondensiert und in Vorlagen aufgefangen. Vom 3. Reaktor wird die Farbstoffschmelze kontinuierlich in die Aufarbeitung gefördert. Dort wird die Farbstoffschmelze mit verdünnter, ca. 6%iger wäßriger Salzsäure kontinuierlich vermischt, wobei der Farbstoff ausfällt. Der Farbstoff wird kontinuierlich abfiltriert und mit Wasser gewaschen. Danach wird er naß gemahlen und erneut abfiltriert (Bandfilter) und gewaschen. Dann wird der Farbstoff getrocknet. Die Filtrate, das Kondensat aus der Reaktion und das Destillat aus der Trocknung werden nach der Neutralisation mit Natronlauge kontinuierlich auf eine Kolonne aufgegeben, um sie durch Einblasen von Dampf von Anilin zu befreien. Das wiedergewonnene Anilin gelangt erneut zum Einsatz.

## Beispiel 5

In 4 hintereinandergeschalteten Reaktoren werden Anilin, Nitrobenzol und salzsaure Eisenchloridlösung bei Temperaturen von 150—185°C umgesetzt. Die Komponenten werden in folgendem Verhältnis in den 1. Reaktor eindosiert: 480 kg Anilin, 235 kg Nitrobenzol, 127 kg Eisenchloridlösung. Letztere enthält 22% $FeCl_2$, 18%

HCl und 60% $H_2O$. Der 1. Reaktor wird bei 150° C, der 2. Reaktor bei 165° C, der 3. Reaktor bei 175° C, der 4. Reaktor bei 185° C gefahren. Nach 7 Stunden Verweilzeit im 1. Reaktor wird das Reaktionsgemisch in den 2. Reaktor gefördert. Nach 7 Stunden Verweilzeit im 2. Reaktor wird das Reaktionsgemisch in den 3. Reaktor befördert. Nach 7 Stunden Verweilzeit im 3. Reaktor wird das Reaktionsgemisch in den 4. Reaktor befördert, wo es 3 Stunden auf 185° C gehalten wird. Danach wird die Farbstoffschmelze auf 100° C abgekühlt und kontinuierlich mit verdünnter, ca. 10%iger wäßriger Salzsäure vermischt, wobei der Farbstoff ausfällt. Der Farbstoff wird in einem Vakuumdrehfilter kontinuierlich abfiltriert und mit Wasser gewaschen. Danach wird der feuchte Filterkuchen mit Natronlauge neutral gestellt, erneut filtriert und mit Wasser gewaschen. Der feuchte Filterkuchen wird in einer Korundscheibenmühle gemahlen und in einem Trockner entwässert. Die Filtrate, das Kondensat aus der Reaktion und das Destillat aus der Trocknung werden nach Neutralisation mit Nartronlauge kontinuierlich auf eine Kolonne aufgegeben, um sie durch Wasserdampfdestillation von Anilin zu befreien. Das wiedergewonnene Anilin gelangt erneut zum Einsatz.

Beispiel 6

In 3 hintereinandergeschalteten Reaktoren werden Anilin, Nitrobenzol und salzsaure Eisenchloridlösung bei Temperaturen von 130—180° C umgesetzt. Die Komponenten werden in folgendem Verhältnis in den 1. Reaktor eindosiert: 560 kg Anilin, 184 kg Nitrobenzol, 113 kg Eisen-chloridlösung. Letztere enthält 22% $FeCl_2$, 18% HCl und 60% $H_2O$. Der 1. Reaktor wird bei 130° C, der 2. Reaktor bei 170° C, der 3. Reaktor bei 180° C gefahren. Nach 6 Stunden Verweilzeit im 1. Reaktor wird das Reaktionsgemisch in den 2. Reaktor, nach 6 Stunden Verweilzeit im 2. Reaktor wird das Reaktionsgemisch in den 3. Reaktor befördert. Dort verbleibt das Reaktionsgemisch ebenfalls 6 Stunden. Danach wird die Farbstoffschmelze auf 100° C abgekühlt und kontinuierlich mit verdünnter, ca. 6%iger wäßriger Salzsäure vermischt, wobei der Farbstoff ausfällt. Der Farbstoff wird abfiltriert und mit Wasser gewaschen. Der feuchte Filterkuchen wird mit Natronlauge neutral gestellt, erneut filtriert und mit Wasser gewaschen. Der feuchte Filterkuchen wird in einer Naßmühle z. B. einer Zahnkolloidmühle gemahlen und in einem Trockner entwässert. Die Filtrate, das Kondensat aus der Reaktion und das Destillat aus der Trocknung werden nach Neutralisation mit Natronlauge kontinuierlich auf eine Kolonne aufgegeben, um sie durch Wasserdampfdestillation von Anilin zu befreien. Das wiedergewonnene Anilin gelangt erneut zum Einsatz.

Beispiel 7

In 4 hintereinandergeschalteten Reaktoren werden Anilin, Nitrobenzol, wäßrige Eisen-(II)-chloridlösung und Salzsäure bei Temperaturen von 150—185° C umgesetzt. Die Komponenten werden in folgendem Verhältnis eindosiert: 840 kg Anilin, 310 kg Nitrobenzol, 60 kg Eisen-(II)-chloridlösung (wäßrig 30%ig), 450 kg Salzsäure 30%ig. Der 1. Reaktor wird bei 150° C, der 2. Reaktor bei 165° C, der 3. Reaktor bei 175° C und der 4. Reaktor bei 185° C gefahren. Die Verweilzeit in jedem Reaktor beträgt 12 Stunden. Das Reaktionsgemisch wird taktweise nach jeweils 12 Stunden vom 1. Reaktor in den 2. Reaktor, vom 2. Reaktor in den 3. Reaktor, vom 3. Reaktor in den 4. Reaktor und vom 4. Reaktor in die Aufarbeitung befördert. Dort wird die Farbstoffschmelze kontinuierlich mit verdünnter, ca. 8%iger wäßriger Salzsäure vermischt, wobei der Farbstoff ausfällt. Der Farbstoff wird in einem Vakuumdrehfilter kontinuierlich abfiltriert und mit Wasser gewaschen. Anschließend wird er kontinuierlich mit Natronlauge schwach alkalisch gestellt, erneut abfiltriert und mit Wasser gewaschen. Der feuchte Filterkuchen wird in einer Naßmühle z. B. einer Trigonal-Zahnringmühle gemahlen und in einem Trockner getrocknet.

Die Filtrate, das Kondensat aus der Reaktion und das Destillat aus der Trocknung werden nach Neutralisation mit Natronlauge kontinuierlich in einer Kolonne zur Entfernung von Anilin aus dem Abwasser mit Hilfe von Wasserdampf (Stripperkolonne) mit Umlaufverdampfer von Anilin befreit. Das wiedergewonnene Anilin gelangt erneut zum Einsatz.

Beispiel 8

In 3 hintereinandergeschalteten Reaktoren werden Anilin, Nitrobenzol und salzsaure Eisenchloridlösung bei Temperaturen von 150—180° C umgesetzt. Die Komponenten werden kontinuierlich in den 1. Reaktor eindosiert. Pro Stunde werden folgende Mengen eingespeist: 420 kg Anilin, 207 kg Nitrobenzol, 113 kg einer Eisen-(II)-chloridlösung. Letztere enthält 22% $FeCl_2$, 18% HCl und 60% $H_2O$. Der 1. Reaktor wird bei 150° C, der 2. Reaktor bei 170° C, der 3. Reaktor bei 180° C gefahren. Die mittlere Verweilzeit pro Reaktor beträgt 8 Stunden. Das Reaktionsgemisch wird kontinuierlich von einem Reaktor zum andern gefördert. Vom 3. Reaktor wird die Farbstoffschmelze kontinuierlich in die Aufarbeitung gefördert. Nach Abkühlen auf 120° C wird die Farbstoffschmelze kontinuierlich mit einer wäßrig alkalischen Kochsalzlösung, die ca. 5% NaCl und ca. 12% NaOH enthält, vermischt, in einem Abscheider von der wäßrigen Phase geschieden, erneut mit heißem Wasser kontinuierlich vermischt und in einem Abscheider von der wäßrigen Phase geschieden. Im 1. Abscheider trennt sich die wäßrige Phase unten ab, im 2. Abscheider oben. Nach dem Scheiden wird die gereinigte Farbstoffschmelze in einem Trockner von Anilin und Wasser befreit. Der Farbstoff kann als solcher eingesetzt oder falls gewünscht gemahlen werden. Die anilinhaltigen Wässer aus Reaktion, Scheidung und Trocknung werden kontinuierlich durch Wasserdampfdestillation von Anilin befreit. Das wiedergewonnene Anilin gelangt erneut zum Einsatz.

Beispiel 9

In einem Reaktor werden Anilin, Nitrobenzol und salzsaure Eisenchloridlösung bei Temperaturen von 120—185° C umgesetzt. Die Komponenten werden in folgendem Verhältnis in den Reaktor gegeben: 480 kg Anilin, 200 kg Nitrobenzol, 127 kg Eisenchloridlösung. Letztere enthält 22% $FeCl_2$, 18% HCl und 60% $H_2O$. Die Reaktionszeit beträgt 10 Stunden bei 120--150° C und 12 Stunden bei 170—185° C. Danach wird die Farbstoffschmelze in einen Trockner gefördert und dort durch Vakuumdestillation oder durch Sprühtrocknung weitgehend von Anilin befreit. Der trockene Farbstoff wird über Dosierschnekke kontinuierlich mit verdünnter, ca. 4% wäßriger Salzsäure vermischt, in einem Kontifilter kontinuierlich abfiltriert und mit Wasser gewaschen. Danach wird der feuchte Filterkuchen in einer Naßmühle gemahlen und in einem Trockner entwässert. Das bei der Trocknung der Farbstoffschmelze wiedergewonnene Anilin gelangt erneut zum Einsatz.

**Patentansprüche**

1. Verfahren zur Herstellung von Anilin-Kondensationsfarbstoffen durch partienweise, taktweise oder kontinuierliche Umsetzung von Anilin und/oder Alkylanilin mit Nitrobenzol, das substituiert sein kann und/oder Diazominobenzol unter Erwärmen und in Gegenwart eines Katalysators, daduch gekennzeichnet, daß die Aufarbeitung des Reaktionsgemischs kontinuierlich durchgeführt wird.

2. Verfahren gemäß Anspruch 1, dadurch gekennzeichnet, daß man Anilin und Nitrobenzol in Gegenwart eines Eisensalzes und gegebenenfalls in Gegenwart von Salzsäure kondensiert.

3. Verfahren gemäß den Ansprüchen 1 und 2, dadurch gekennzeichnet, daß man die anilinhaltige Farbstoffschmelze zur Aufarbeitung kontinuierlich mit einem wäßrigen Medium mischt, gegebenenfalls je nach Farbstofftyp den pH-Wert einstellt und gegebenenfalls kontinuierlich die wäßrige Phase von der anilinhaltigen Farbstoffschmelze scheidet und Anilin entfernt.

4. Verfahren gemäß den Ansprüchen 1—3, dadurch gekennzeichnet, daß man die Farbstoffschmelze kontinuierlich mit wäßriger, vorzugsweise 0,5—2%iger Salzsäure, mit wäßriger, vorzugsweise 4—12%iger Kochsalzlösung, mit wäßrig-alkalischer, vorzugsweise 2—8% Kochsalz und 2—15,0% Natriumhydroxid enthaltender Kochsalzlösung oder mit wäßriger, vorzugsweise 2—20%iger Natronlauge mischt.

5. Verfahren gemäß den Ansprüchen 1 und 2, dadurch gekennzeichnet, daß man die Farbstoffschmelze mit verdünnter, vorzugsweise 2—10%iger wäßriger Salzsäure innig vermischt und man den ausgefallenen Farbstoff kontinuierlich abfiltriert.

6. Verfahren gemäß den Ansprüchen 1—5, dadurch gekennzeichnet, daß man das Mischen in Reaktoren mit Rührern oder in Mischrohren, Mischdüsen oder Mischpumpen durchführt.

7. Verfahren gemäß Anspruch 4, dadurch gekennzeichnet, daß man das Aufarbeitungsgemisch mit Wasser, wäßriger Kochsalzlösung, wäßrig alkalischer Kochsalzlösung, wäßriger Natronlauge oder mit wäßriger Salzsäure kontinuierlich in Abscheider fördert, in denen sich organische und wäßrige Phase trennen und beide Phasen kontinuierlich abfließen.

8. Verfahren gemäß den Ansprüchen 4 und 7, dadurch gekennzeichnet, daß man die Farbstoffschmelze in zwei oder mehreren hintereinander geschalteten Mischer-Abscheider-Anlagen kontinuierlich aufarbeitet.

9. Verfahren gemäß den Ansprüchen 1—8, dadurch gekennzeichnet, daß man die Farbstoffschmelze vor der Vermischung mit einem wäßrigen Medium durch Sprühtrocknung, Normaldruck- oder Vakuumdestillation weitgehend von Anilin befreit.

10. Verfahren gemäß den Ansprüchen 5 und 6, dadurch gekennzeichnet, daß man an die kontinuierliche Vermischung der Farbstoffschmelze mit einem wäßrigen Medium eine kontinuierliche Isolierung des Farbstoffs durch Abfiltrieren, Waschen, gegebenenfalls Naßmahlen, gegebenenfalls erneutes Abfiltrieren und gegebenenfalls Trocknen anschließt.

**Claims**

1. Process for the preparation of aniline condensation dyestuffs by reacting aniline and/or an alkyl-aniline, batchwise, in cycles or continuously, with nitrobenzene, which can be sustituted, and/or diazoaminobenzene, with warming and in the presence of a catalyst, characterised in that the reaction mixture is worked up continuously.

2. Process according to Claim 1, characterised in that aniline and nitrobenzene are subjected to a condensation reaction in the presence of an iron salt and optionally in the presence of hydrochloric acid.

3. Process according to Claims 1 and 2, characterised in that, for working-up, the aniline-containing dyestuff melt is mixed continuously with an aqueous medium, the pH value is adjusted if necessary, depending on the type of dyestuff, and, optionally continuously, the aqueous phase is separated from the aniline-containing dyestuff melt and aniline is removed.

4. Process according to Claims 1—3, characterised in that the dyestuff melt is mixed continuously with aqueous, preferably 0.5—2% strength, hydrochloric acid, with aqueous, preferably 4—12% strength, sodium chloride solution, with aqueous alkaline sodium chloride solution containing preferably 2—8% of sodium chloride and 2—15.0% of sodium hydroxide, or with aqueous, preferably 2—20% strength sodium hydroxide solution.

5. Process according to Claims 1 and 2, characterised in that the dyestuff melt is intimately mixed with dilute, preferably 2—10% strength, aqueous hydrochloric acid and the dyestuff which has precipitated out is filtered off continuously.

6. Process according to Claims 1—5, characterised in that mixing is carried out in reactors with stirrers or in mixing tubes, mixing nozzles or mixing pumps.

7. Process according to Claim 4, characterised in that the mixture for working-up is fed continuously, with water, aqueous sodium chloride solution, aqueous alkaline sodium chloride solution or aqueous sodium hydroxide solution or with aqueous hydrochloric acid, into separators, in which the organic and the aqueous phase separate and the two phases run off continuously.

8. Process according to Claims 4 und 7, characterised in that the dyestuff melt is worked-up continuously in two or more mixer/separator units connected in series.

9. Process according to Claims 1—8, characterised in that the dyestuff melt is substantially freed from aniline by spray-drying or distillation under normal pressure or in vacuo, before the melt is mixed with an aqueous medium.

10. Process according to Claims 5 and 6, characterised in that the continuous mixing of the dyestuff melt with an aqueous medium is followed by continuous isolation of the dyestuff by filtering off, washing, optionally wet-grinding, optionally filtering off again and optionally drying.

## Revendications

1. Procédé de production de colorants de condensation de l'aniline par réaction par parties, intermittente ou continue de l'aniline et/ou d'une alkylaniline avec le nitrobenzène qui peut être substitué et/ou le diazominobenzène en chauffant et en présence d'un catalyseur, caractérisé en ce que le traitement du mélange réactionnel est effectué en continu.

2. Procédé suivant la revendication 1, caractérisé en ce qu'on condense l'aniline et le nitrobenzène en présence d'un sel de fer et le cas échéant en présence d'acide chlorhydrique.

3. Procédé suivant les revendications 1 et 2, caractérisé en ce qu'on mélange continuellement la masse fondue de colorant contenant de l'aniline, en vue du traitement, avec un milieu aqueux, on ajuste éventuellement le pH selon le type de colorant et le cas échéant, on sépare continuellement la phase aqueuse de la masse fondue de colorant contenant de l'aniline et on élimine l'aniline.

4. Procédé suivant les revendications 1 à 3, caractérisé en ce qu'on mélange continuellement la masse fondue de colorant avec de l'acide chlorhydrique aqueux de préférence à 0,5—2%, avec une solution aqueuse de chlorure de sodium de préférence à 4—12%, avec du chlorure de sodium aqueux-alcalin de préférence à 2—8% et avec une solution de chlorure de sodium contenant 2—15,0% d'hydroxyde de sodium ou vec de la lessive de soude aqueuse de préférence à 2—20%.

5. Procédé suivant les revendications 1 et 2, caractérisé en ce qu'on mélange intimement la masse fondue de colorant avec de l'acide chlorhydrique aqueux dilué de préférence à 2—10% et on filtre continuellement le colorant précipité.

6. Procédé suivant les revendications 1—5, caractérisé en ce qu'on effectue le mélange dans des réacteurs à agitateurs ou dans des tubes mélangeurs, dans des buses mélangeuses ou dans des pompes mélangeuses.

7. Procédé suivant la revendication 4, caractérisé en ce qu'on transporte continuellement le mélange à traiter avec de l'eau, une solution aqueuse de chlorure de sodium, une solution aqueuse-alcaline de chlorure de sodium, de la lessive de soude aqueuse ou avec de l'acide chlorhydrique aqueux dans des séparateurs dans lesquels la phase organique et la phase aqueuse se séparent et les deux phases s'écoulent continuellement.

8. Procédé suivant les revendications 4 et 7, caractérisé en ce qu'on traite continuellement la masse fondue de colorant dans deux ou plusieurs installations à mélangeur-séparateur montées en série.

9. Procédé suivant les revendications 1—8, caractérisé en ce que la masse fondue de colorant est largement débarrassée de l'aniline avant le mélange avec un milieu aqueux, par séchage par pulvérisation, distillation à la pression normale ou distillation sous vide.

10. Procédé suivant les revendications 5 et 6, caractérisé en ce qu'on effectue après le mélange continu de la masse fondue de colorant avec un milieu aqueux, un isolement continu du colorant par filtration, lavage, éventuellement broyage par voie humide, le cas échéant nouvelle filtration et, éventuellement, séchage.